# FASCICULE DE BREVET EUROPEEN

(11) **EP 0 763 904 B1**
(45) Date de publication et mention de la délivrance du brevet: **26.06.2002**
(21) Numéro de dépôt: 96401913.7
(22) Date de dépôt: 06.09.1996
(51) Int. Cl.: H04B 1/38, H04M 1/02

(54) **Terminal de radiocommunication agencé pour recevoir un capot de protection**
Funkgerät mit abnehmbarer Schutzkappe
Radio communications terminal having a mountable/dismountable protective cover

(30) Priorité: 14.09.1995 FR 9510765
(43) Date de publication de la demande: 19.03.1997
(73) Titulaire: ALCATEL, 75008 Paris (FR)
(72) Inventeur: Picaud, Philippe, 92200 Neuilly s/Seine (FR)
(74) Mandataire: Sciaux, Edmond

(56) Documents cités:
- EP-A- 0 414 365
- US-A- 5 140 632

## Description

La présente invention concerne un terminal de radiocommunication agencé pour recevoir un capot de protection.

Par terminal de radiocommunication, on entend notamment des radiotéléphones mais également, de manière plus générale, des terminaux qui reçoivent ou transmettent des informations au moyen d'une liaison radio.

Les terminaux comprennent souvent des organes de commande ou de contrôle tel qu'un clavier ou un écran de visualisation. Ces organes présentant une relative fragilité, il convient de les protéger. On connaît d'ores et déjà plusieurs solutions qui ont été proposées à cet effet.

Une première solution consiste à prévoir une housse en matière souple semblable à celle que l'on utilise pour d'autres appareils portatifs, un appareil photographique par exemple. Une telle housse, outre la quantité de matière qu'elle nécessite, requière une opération de mise en forme et d'assemblage. De plus, elle augmente sensiblement le volume du terminal, ce qui va à l'encontre des préoccupations tant de l'utilisateur que du fabricant d'un tel terminal.

Une deuxième solution déjà connue pour les radiotéléphones consiste à prévoir un volet articulé à la base du corps du terminal. En état de veille, ce volet vient s'appliquer contre le clavier afin de le protéger, tandis qu'en état d'utilisation le volet s'étend sensiblement dans l'axe du corps. Il s'agit là d'un agencement mécanique relativement complexe impliquant l'emploi d'une charnière. De plus, un tel agencement présente par nature une certaine fragilité notamment en état d'utilisation, ce qui va à l'encontre du but poursuivi.

Une troisième solution décrite dans la demande de brevet DE 38 36 406 consiste à prévoir un manchon monté coulissant sur le corps du terminal. En état de veille, le manchon recouvre le corps, tandis qu'en état d'utilisation il vient dans le prolongement de ce corps, rallongeant ainsi le terminal. Là encore, en état d'utilisation le terminal se trouve relativement fragilisé du fait de l'association de deux éléments reliés à leurs extrémités. De plus, l'encombrement du terminal se voit notablement augmenté.

La présente invention a ainsi pour but un terminal agencé pour recevoir un capot de protection d'une extrême simplicité mécanique, peu coûteux et d'une grande robustesse.

Dans ce but, le terminal de radiocommunication qui est agencé pour recevoir un capot de protection, comporte des moyens de guidage destinés à coopérer avec des moyens de fixation du capot, et les moyens de guidage sont accessibles aux moyens de fixation par une face de ce terminal, de sorte que le capot soit amovible.

En effet, en état d'utilisation le capot de protection n'est d'aucune utilité et il n'y a donc pas lieu de le maintenir sur le terminal. Le capot devient donc un accessoire du terminal. Un utilisateur peut choisir de l'acheter ou non, de le placer sur le terminal ou de l'en retirer, de le conserver par devers lui ou non.

Avantageusement, le terminal comprend des moyens de verrouillage destinés à coopérer avec des moyens de bloquage du capot pour maintenir ce capot dans une position prédéterminée.

De plus, les moyens de guidage sont disposés symétriquement, de sorte que le capot puisse être fixé soit sur une face avant soit sur une face arrière de ce terminal.

Ainsi en état d'utilisation, il est fort commode de ranger le capot au dos du terminal. Cela délivre l'utilisateur du souci de trouver un emplacement où le mettre et éventuellement de l'égarer.

En agissant ainsi, la fragilité du terminal n'est pas affectée et l'encombrement n'est pas modifié de manière significative.

L'invention concerne naturellement le terminal pourvu du capot.

Cette invention apparaîtra maintenant de manière plus claire et plus précise dans le cadre de la description d'un exemple de réalisation donné à titre illustratif et non limitatif en se référant aux figures annexées qui représentent :
- la figure 1, un terminal selon l'invention vu de face, lorsque le capot est en cours d'application,
- la figure 2, une vue de profil du terminal schématisé dans la figure 1,
- la figure 3, un capot prévu pour le terminal selon l'invention, et
- la figure 4, un terminal pourvu d'un capot sur sa face arrière.

Les éléments présents dans différentes figures seront affectés d'une seule référence.

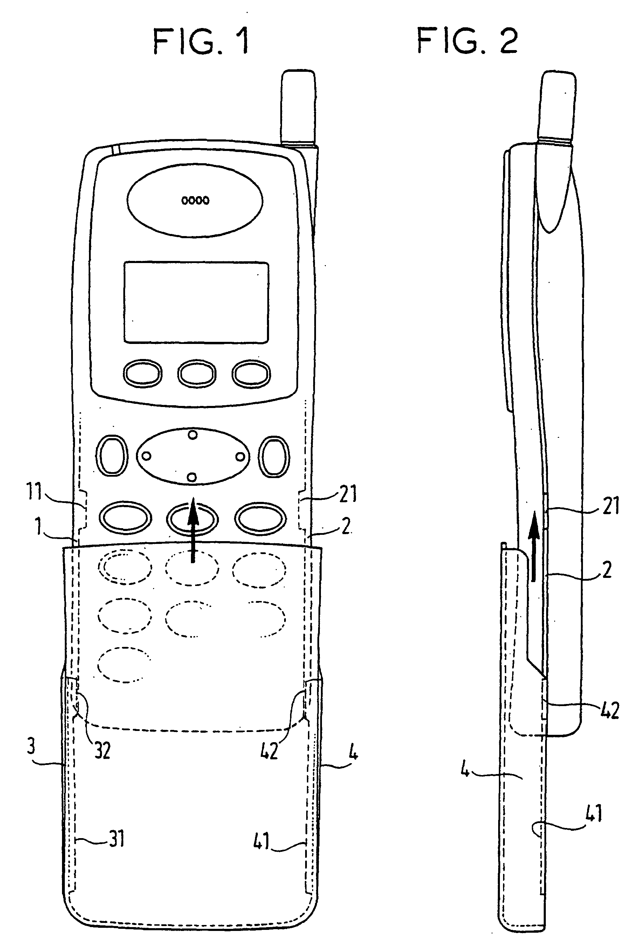

En référence aux figures 1 et 2, le terminal comprend une première rainure 1 sur sa face latérale gauche et une deuxième rainure 2 sur sa face latérale droite, ces deux rainures débouchant sur la face inférieure.

Dans les première 1 et seconde 2 rainures sont respectivement ménagées une première 11 et une seconde 21 cavités.

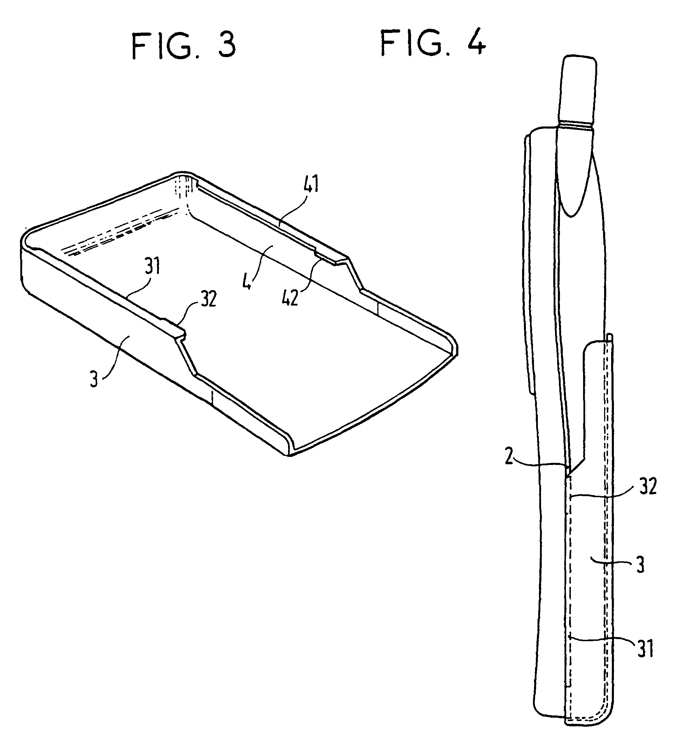

Le capot qui est également représenté en perspective à la figure 3 comporte une face principale, une face latérale gauche 3, une face latérale droite 4 et une face inférieure qui sont respectivement prévues pour venir en regard de la face avant, de la face latérale gauche, de la face latérale droite et de la face inférieure du terminal.

La face latérale gauche 3 de ce capot respectivement la face latérale droite 4 est pourvue d'un premier rebord 31 respectivement d'un second rebord 41. Ces rebords sont sensiblement parallèles à la face principale et sont disposés du côté opposé à cette face principale sur les faces latérales 31, 41, s'étendant vers l'intérieur du capot.

Les premier 31 respectivement second 41 rebords sont pourvus d'une première 32 respectivement d'une seconde 42 saillies.

Le capot est prévu pour être emmanché sur le terminal par sa face inférieure, les rebords 31, 41 venant coulisser dans les rainures correspondant 1, 2. Ainsi la distance séparant les rebords 31, 41 est sensiblement la même que celle qui sépare les rainures 1, 2. De même, la largeur des rainures est voisine de l'épaisseur des rebords. Enfin, la distance séparant les cavités de la face inférieure du terminal est équivalente à celle qui sépare les saillies de la face inférieure du capot.

La première 32 et la deuxième 42 saillies sont prévues pour s'engager respectivement dans la première 11 et la deuxième 21 cavités. A cet effet, le capot possède la souplesse nécessaire de sorte que les deux saillies puissent s'écarter suffisamment pour s'engager dans les rainures correspondantes.

L'ensemble saillies-cavités permet de maintenir le capot dans une position prédéterminée par rapport au terminal, évitant ainsi qu'il puisse glisser.

Ainsi, on introduit les saillies dans les rainures et on fait coulisser le capot jusqu'à ce que ces saillies viennent se positionner dans les cavités correspondantes.

On remarquera donc qu'il suffit dans ce cas de prévoir une seule saillie et une seule cavité pour assurer, la fonction de maintien du capot.

Le mode de réalisation présenté propose un agencement mécanique particulier qui n'est évidemment pas le seul à permettre la mise en oeuvre de l'invention.

A simple titre d'exemple on précisera qu'une fonction équivalente peut être réalisée en prévoyant des nervures qui viendraient à la place des rainures sur le terminal, ces nervures étant prévues pour venir coopérer avec des gorges qui leurs correspondent sur le capot.

Ainsi, la caractéristique essentielle de l'invention consiste à prévoir des moyens de guidage sur le terminal qui coopèrent avec des moyens de fixation sur le capot, ces deux moyens entrant en contact par une face du terminal.

De même, le mode de réalisation présenté propose de disposer des saillies sur les rebords du capot et de ménager des cavités dans les rainures. On peut tout aussi bien prévoir des saillies dans les rainures et des cavités dans les rebords.

Ains, plusieurs solutions sont disponibles pour maintenir le capot dans une position prédéterminée par rapport au terminal.

Ces solutions consistent à agencer des moyens de verrouillage sur le terminal qui coopèrent avec des moyens de bloquage sur le capot.

Selon une caractéristique additionnelle de l'invention, les moyens de guidage 1, 2 sont disposés symétriquement sur le terminal, si bien que le capot peut venir en regard de la face arrière du terminal, comme représenté à la figure 4.

Cette disposition s'avère particulièrement commode pour ranger le capot lorsque l'on souhaite utiliser le terminal.

Dans ce cas on peut prévoir uen seule saillie sur l'un des rebords du capot, mais il faut conserver les deux cavités de sorte que cette saillie vienne s'engager dans l'une ou l'autre des cavités selon que le capot vient contre la face avant ou contre la face arrière du terminal.

## Revendications

1. Terminal de radiocommunication agencé pour recevoir un capot de protection, comportant des moyens de guidage (1, 2) destinés à coopérer avec des moyens de fixation (31, 41) d'un tel capot,
**caractérisé en ce que** lesdits moyens de guidage (1, 2) sont accessibles auxdits moyens de fixation par une face de ce terminal (31, 41), de sorte que le capot soit amovible.

2. Terminal selon la revendication 1, **caractérisé en ce qu'**il comprend des moyens de verrouillage (11, 21) destinés à coopérer avec des moyens de bloquage (32, 42) d'un tel capot pour maintenir le capot dans une position prédéterminée.

3. Terminal selon l'une quelconque des revendications 1 ou 2, **caractérisé en ce que** lesdits moyens de guidage (1, 2) sont disposés symétriquement, de sorte que le capot puisse être fixé soit sur une face avant soit sur une face arrière de ce terminal.

4. Terminal selon l'une quelconque des revendications 1 à 3 pourvu d'un capot.

## Patentansprüche

1. Endgerät zur Funkkommunikation, welches zum Aufnehmen einer Schutzkappe geeignet ist, und Führungsmittel (1, 2) aufweist, die mit Befestigungsmitteln (31, 41) einer solchen Kappe zusammenwirken sollen,
**dadurch gekennzeichnet, dass** die Führungsmittel (1, 2) den Befestigungsmitteln (31, 41) über eine Seite des Endgeräts zugänglich sind, so dass die Kappe abnehmbar ist.

2. Endgerät nach Anspruch 1, **dadurch gekennzeichnet, dass** es Verriegelungsmittel (11, 21) aufweist, welche mit Blockierungsmitteln (32, 42) einer solchen Kappe zusammenwirken sollen, um die Kappe in einer vorbestimmten Position zu halten.

3. Endgerät nach einem der Ansprüche 1 oder 2, **dadurch gekennzeichnet, dass** die Führungsmittel (1, 2) symmetrisch angeordnet sind, so dass die Kappe entweder auf einer Vorderseite oder einer Rückseite des Endgeräts befestigt werden kann.

4. Endgerät nach einem der Ansprüche 1 bis 3, ausgestattet mit einer Kappe.

## Claims

1. Mobile radio terminal adapted to receive a protective cover and including guide means (1, 2) adapted to cooperate with fixing means (31, 41) on such a cover, **characterized in that** said guide means (1, 2) are accessible to said fixing means via one face of said terminal (31, 41) so that the cover is removable.

2. Terminal according to claim 1 **characterized in that** it comprises locking means (11, 21) adapted to cooperate with locking means (32, 42) on such a cover to hold the cover at a predetermined position.

3. Terminal according to either claim 1 or claim 2, **characterized in that** said guide means (1,2) are disposed symmetrically so that the cover can be fixed either to a front face or to a rear face of said terminal.

4. Terminal according to any of claims 1 to 3 provided with a cover.
